# DEMANDE DE BREVET EUROPEEN

(11) **EP 1 044 601 A1**
(43) Date de publication de la demande: **18.10.2000**
(21) Numéro de dépôt: 00401014.6
(22) Date de dépôt: 12.04.2000
(51) Int. Cl.: A01J 25/16

(54) **Procédé de returnement avec repositionnement et maintien des produits**

(30) Priorité: 16.04.1999 FR 9904814
(71) Demandeur: EQUIPEMENTS TECHNIQUES DES INDUSTRIES ALIMENTAIRES ET CONNEXES TECNAL, 79000 Niort (FR)
(72) Inventeur: Roumeau, Alain, 17330 Doeuil-sur-Mignon (FR)
(74) Mandataire: Keib, Gérard

(57) **Abrégé**

Procédé de retournement d'au moins une préparation alimentaire (4), notamment d'un fromage ou d'une préparation fromagère durant son affinage, initialement déposée sur une claie (3) amont, jusqu'à une claie réceptrice aval de la ou des préparations retournées du fait du retournement dans un retourneur, les produits à retourner étant repositionnés pour le retournement par des moyens de repositionnement (20), et maintenus lors du retournement, sans serrage, par un dispositif de maintien (38, 39, 40) limitant leur déplacement, de manière qu'ils soient en position souhaitée sur la claie réceptrice (36) après le retournement.

## Description

L'invention concerne un procédé de retournement de claies de chargement de préparations alimentaires, un dispositif de mise en oeuvre de ce procédé, ainsi qu'une installation dans laquelle ce procédé est mis en oeuvre et/ou comportant un tel dispositif.

Diverses préparations alimentaires telles que des fromages ou d'autres préparations à base animale sont retournées lors de leur fabrication,.

Ainsi, les fromages à pâte molle, par exemple à croûte fleurie (camembert, brie, etc.), à croûte séchée (picodon, chèvres, etc.) ou à croûte lavée (maroilles, munster, etc.), subissent un retournement lors de l'égouttage et/ou l'affinage, souvent effectué sur une claie.

L'affinage est effectué dans un haloir, où par exemple une ambiance avec 14°C de température, et 80% d'humidité est maintenue.

Dans les installations industrielles, les claies sont réalisées en métal, généralement avec un cadre et une grille en acier inoxydable filés.

Divers documents se rapportent au domaine technique de l'invention.

Le document FR-A-2.711.887 décrit la mise en place et/ou le retrait de fromages sur des claies.

Pour ce faire, deux supports tels que tapis sont utilisés, en les disposant face à face pour maintenir les fromages entre eux, puis leur faire effectuer un demi-tour.

Ce document décrit les pieds d'angle des claies, qui permettent leur empilage, les pieds d'une claie s'emboîtant sur les pieds de la claie inférieure. Tandis que pour faciliter l'enlèvement des fromages des claies, qui ont tendance à adhérer, est décrite l'utilisation de plaques rainurées en silicone, permettant aux fils de la claie de pénétrer dans les rainures de la plaque.

Ce document précise que, même en production industrielle, il n'est pas possible d'éviter les manipulations manuelles des fromages.

Le document FR-A-2.724.287 décrit une fromagerie comprenant une zone d'amenée de fromages moulés sur des claies, une zone d'évacuation et, disposé entre ces zones, un système de transport entre deux postes de traitement.

Au moins un dispositif de brosse est agencé pour permettre son soulèvement ou abaissement et/ou déplacement parallèlement aux surfaces inférieures et supérieures des fromages moulés.

Le document FR-A-2.730.129 décrit un dispositif de retournement de fromages transportés sur des claies.

Il comprend plusieurs broches de levage à la verticale au dessous d'une claie en approche. Un levier de retournement passe à travers les broches et retourne un fromage porté par les broches.

Le document FR-A-2.732.552 décrit des claies pour la fabrication de fromage, un procédé de fabrication de fromages et un dispositif de retournement d'une pile de claies.

Le dispositif de retournement comporte un anneau dans lequel est disposé la pile de claies, monté sur des rouleaux et pourvu de deux vérins en vis-à-vis pour enserrer la pile.

Le document FR-A-2 443 801 décrit un procédé pour retourner des pièces de fromage, dans lequel une pile de claies est progressivement soulevée pour la prise en charge de claies. La batterie à retourner est serrée mécaniquement et retournée à 180°, puis desserrée et transférée vers une pile de claies de sortie.

Les techniques connues présentent dans la pratique des inconvénients.

Lorsque l'empilement des claies est manuel, il est pénible, en particulier lorsqu'il doit être effectué dans une ambiance telle que celle d'un hâloir. Il est donc souhaitable de limiter de telles interventions humaines.

Un tel empilement est difficile du fait de la relative flexibilité (non-planéité, flexion pieds, etc.) et fragilité des claies (obligeant à leur remplacement). Cela a abouti à prévoir des machines avec de multiples capteurs et commandes de réglage dédiées, qui les rendent lourdes et coûteuses.

Une autre difficulté pratique est la différence d'épaisseur entre les fromages.

Lorsque les produits à retourner sont serrés entre deux claies, il est difficile de tous les maintenir entre les claies dans une position souhaitée.

D'une part des produits peuvent être altérés, notamment les produits les plus épais.

D'autre part, des produits peuvent se déplacer lors du retournement, et se toucher sur la claie réceptrice des produits retournés. C'est le cas pour les produits les plus minces. L'on doit alors procéder à une étape supplémentaire avant le conditionnement ultérieur, opération délicate notamment au-delà de trois claies empilées.

De plus, lorsque les produits sont décollés de la claie avant leur retournement, les produits sont souvent déplacés, ce qui perturbe leur positionnement souhaité, en particulier leur alignement, avant le retournement.

L'invention vise à résoudre ces inconvénients notamment, pour obtenir un retournement automatisé des produits, permettant le positionnement souhaité et la non altération des produits à l'issue du retournement.

A cet effet, l'invention a pour objet selon un premier aspect un procédé de retournement d'au moins une préparation alimentaire, notamment d'un fromage ou d'une préparation fromagère durant son affinage, initialement déposée sur une claie amont, jusqu'à une claie réceptrice aval de la ou des préparations retournées du fait du retournement dans un retourneur, les produits à retourner étant repositionnés pour le retournement par des moyens de repositionnement, et maintenus lors du retournement, sans serrage, par un dispositif de maintien limitant leur déplacement, de manière qu'ils soient en position souhaitée sur la claie réceptrice après le retournement.

Après repositionnement dans la position souhaitée pour le retournement, les produits sont alignés et forment plusieurs lignes parallèles entre elles et perpendiculaires à la direction de convoyage.

Les moyens de repositionnement des produits sont mobiles dans la zone inter-produits, repoussant les produits hors de cette zone, jusqu'à la position souhaitée pour le retournement, les moyens de repositionnement étant animés de deux mouvements de translation inverse, aller et retour.

L'étape de retournement d'une claie comprend les phases de :
- mise en position du dispositif de maintien, la claie amont supportant les produits à retourner étant au droit et en position inférieure dans le retourneur, la claie réceptrice étant en position supérieure dans le retourneur par rapport à la claie amont avant le retournement, la claie inférieure et la claie supérieure étant séparées par un espace suffisant pour éviter le serrage des produits à retourner ;
- rotation du retourneur de 180°, la claie réceptrice étant amenée en position inférieure et devenant une claie aval supportant les produits retournés, le dispositif de maintien et la rotation étant tels que le déplacement non souhaité des produits est évité lors du retournement ;
- retrait du dispositif de maintien et évacuation de la claie réceptrice du retourneur.

La claie amont introduite dans le retourneur est élevée par un premier plateau d'un rotor du retourneur, afin d'emprisonner les produits entre les deux claies, sans serrage de ceux-ci, les produits s'engageant en fin d'élévation du premier plateau entre les moyens de maintien positionnés dans les zones inter-produits de la claie à retourner; puis après la rotation de 180°, la claie réceptrice des produits aval est descendue par un second plateau du rotor du retourneur, sur le système de transfert aval.

Selon un mode de réalisation, le procédé de retournement permet, à partir d'une pile amont de claies, de former une nouvelle pile aval de claies, dans laquelle la ou les préparations alimentaires ont été retournées par rapport à un axe horizontal, le procédé comprenant les étapes de :
- mise en place de la pile de claies amont contenant les produits à retourner ;
- prélèvement à l'aide de moyens de désempilage d'une claie amont à retourner de la pile de claies amont ;
- transfert de la claie prélevée, avec décollage éventuel des produits de la claie à retourner, jusqu'à un poste de retournement ;
- retournement de la claie amont par le retourneur, les produits passant sur la claie réceptrice du fait du retournement, en étant maintenus par le dispositif de maintien ;
- transfert de la claie réceptrice vers la pile de claies réceptrices aval ;
ces étapes étant éventuellement recommencées jusqu'au désempilage complet des claies de la pile amont et à l'empilage de la pile de claies aval, dans laquelle les préparations alimentaires sont retournées.

Selon une variante de réalisation, le désempilage des claies de la pile de claies amont comprend les étapes suivantes :
- saisie par des moyens de désempilage de la pile de claies amont par le bas;
- élévation de la pile de claies pour permettre sa dépose sur un dispositif de transfert ;
- dépose de la pile sur le dispositif de transfert puis relevage de la pile sauf la claie inférieure qui reste sur le dispositif de transfert qui la conduit jusqu'au poste de retournement

L'étape d'empilage comprend les phases suivantes :
- saisie par des moyens d'empilage de la claie réceptrice chargée des produits retournés, située en position inférieure dans la pile de claies en cours de constitution ;
- relevage de la pile comprenant la claie saisie
- une fois le nombre de claies empilées correspondant à la consigne d'empilage, escamotage du dispositif de transfert pour permettre la descente de la pile et son évacuation.

Selon un deuxième aspect, l'invention a pour objet un dispositif de retournement mettant en oeuvre le procédé de retournement automatisé de préparations alimentaires présenté précédemment, le dispositif comportant sur un châssis unitaire :
- un dispositif de repositionnement comprenant des moyens de repositionnement des produits avant le retournement ;
- un dispositif de maintien des produits pendant le retournement ;
- des moyens de retournement des claies supportant les produits à retourner ;
- le cas échéant un dispositif de désempilage de claies en entrée et un dispositif d'empilage de claies en sortie ;
- un dispositif de transfert de claies en amont et en aval du dispositif de retournement.

Le dispositif de repositionnement forme un système de conformation de lignes de produits sur les claies, destiné à reconstituer l'alignement théorique souhaité des fromages sur les claies à retourner, de manière à pouvoir mettre en place les moyens de maintien sans altérer les produits lors du retournement.

Selon une variante de réalisation, les moyens de repositionnement comprennent des barres pleines, creuses ou grillagées, animées de mouvements horizontaux dans la zone interfromages destinées à pousser les produits hors de cette zone, leur section étant parallèlépipédique ou sensiblement circulaire.

Selon une autre variante de réalisation, les moyens de repositionnement comprennent des doigts de guidage sensiblement verticaux, quatre doigts par produit, associés sur deux structures, animées de deux mouvements de translation inverse, aller et retour, évoluant au-dessus de la claie, dans la zone inter-produits, de manière à repousser les produits hors de cette zone.

Selon une autre variante de réalisation, les moyens de repositionnement comprennent des coins présentant une face arrondie de guidage des produits en-dehors de la zone inter-fromages.

Selon un mode de réalisation, les moyens de maintien comprennent des cloisons de retenue, situées entre chaque ligne de produits, des produits tombant par gravité, et des plots éventuellement fixés aux cloisons, les moyens de maintien ayant un encombrement suffisant pour maintenir les produits dans la position souhaitée lors du retournement, typiquement au moins deux plots par produit, la distance entre la surface supérieure d'un produit et la claie supérieure avant retournement étant comprise entre 0,1 et 0,5 fois l'épaisseur du produit.

Selon un mode de réalisation, les moyens de maintien et de repositionnement ont une structure modulaire adaptable aux produits de la claie à retourner de manière à pouvoir retourner plusieurs formats différents de produits sur une même claie.

Selon un troisième aspect, l'invention concerne une installation telle qu'une fromagerie, comportant un dispositif tel que présenté précédemment et/ou permet la mise en oeuvre du procédé présenté ci-dessus.

D'autres objets et avantages de l'invention apparaîtront au cours de la description qui va être faite en référence aux figures annexées dans lesquelles :

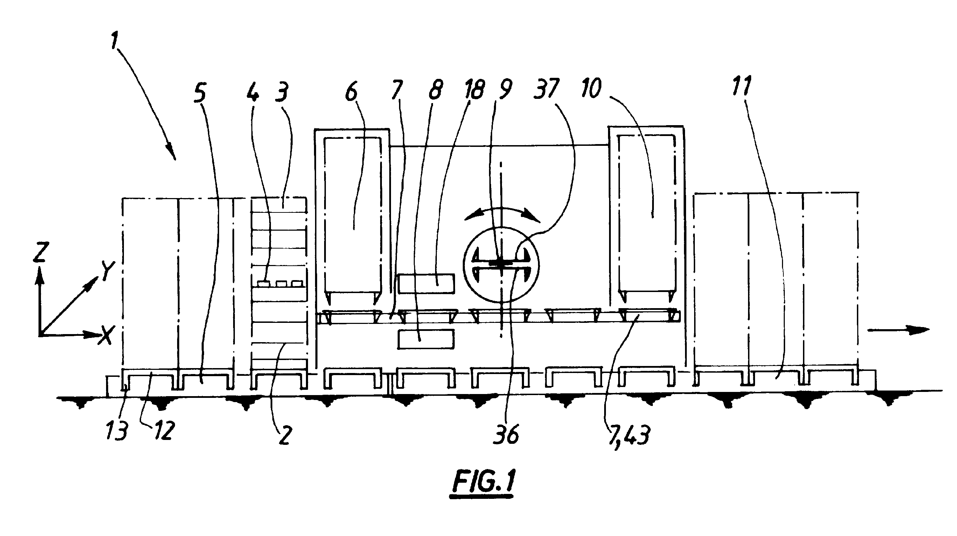

- la figure 1 représente une vue de côté du dispositif de retournement selon l'invention ;

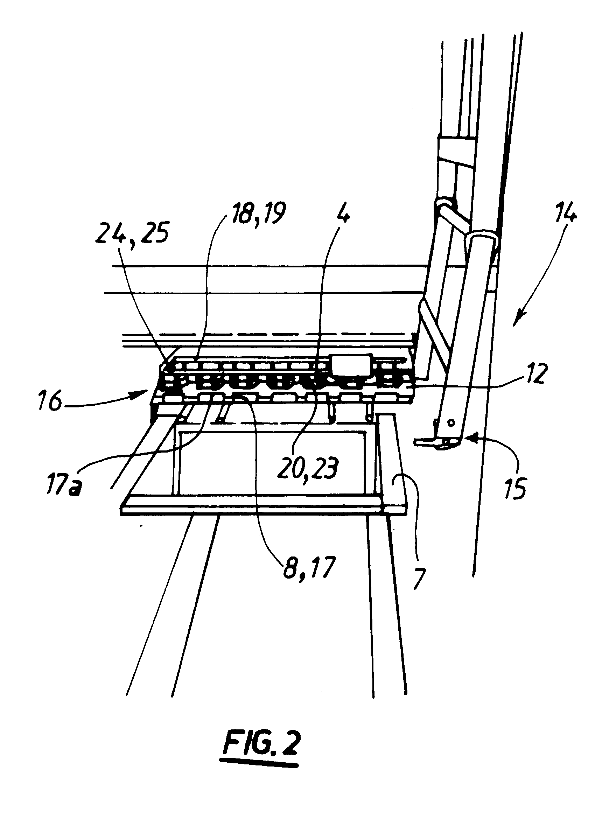

- la figure 2 est une vue en perspective de face illustrant les moyens de repositionnement ;

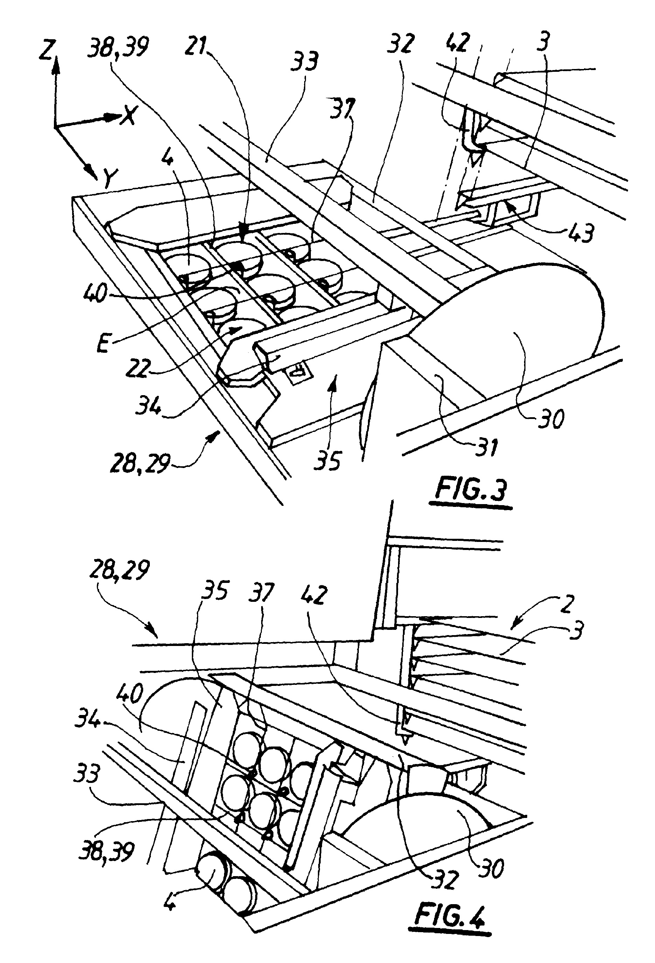

- la figure 3 est une vue partielle en perspective au niveau du retourneur de claies, montrant les moyens de maintien ;
- la figure 4 est une vue en perspective partielle au niveau du retourneur, lors du retournement ;

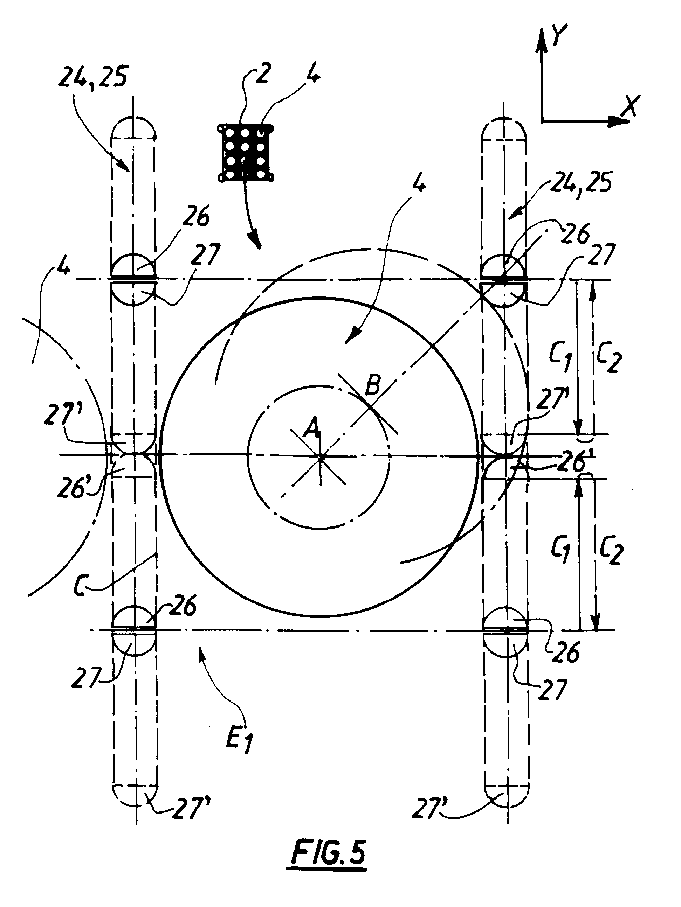

- la figure 5 est une vue en agrandissement de dessus illustrant le fonctionnement des moyens de positionnement au niveau d'un produit retourné.

Sur les figures, sont représentées des directions orthogonales X, Y, Z.

La direction X longitudinale et la direction Y transversale sont sensiblement horizontales. La direction Z, dite d'élévation, est sensiblement verticale.

L'invention est décrite en se reportant à ces directions X, Y, Z.

Les constituants de l'invention sont décrits dans leurs positions et orientations courantes d'utilisation. Il est entendu qu'ils peuvent prendre diverses positions ou orientations, notamment pour les constituants déplaçables tels que les claies.

Les termes "inférieur" et "supérieur" sont considérés suivant la direction d'élévation Z, indiquant respectivement un emplacement bas et haut.

Pour simplifier la description, l'invention est décrite uniquement en rapport avec la fabrication de fromages. Il est clair que d'autres applications du dispositif de retournement concernent d'autres produits alimentaires, voire non alimentaires.

On décrit maintenant un premier mode de réalisation selon l'invention.

Le dispositif de retournement 1 est destiné à l'industrie fromagère. Lors de leur processus de fabrication, les fromages 4 sont affinés dans des hâloirs.

Les fromages 4 sont stockés sur les claies 2, constituées en piles 3, par exemple de 2 mètres de hauteur.

Le dispositif de retournement 1 permet de retourner des claies 2, ici en piles 3.

L'affinage nécessite de nombreuses retournes qui sont réalisées claie par claie, par le dispositif décrit.

Le dispositif 1 retourneur est une machine qui peut être installée à poste fixe, à proximité des hâloirs, ou disposée en hâloir, à poste fixe, et déplaçable de hâloir en hâloir, manuellement sur chariot de manutention approprié.

La machine posée au sol comprend successivement d'amont en aval des premiers moyens de convoyage 5 de piles 3 de claies 2 en entrée, des moyens de désempilage 6 claie par claie des claies 2 de chaque pile 3, un système de transfert 7 des claies 2 entre la pile 3 jusqu'à des moyens de décollage 8 des fromages 4 des claies, des moyens de retournement 9 de claies 2, des moyens d'empilage 10, des seconds moyens de convoyage 11 de piles en sortie.

On décrit maintenant plus précisément ces constituants, et le fonctionnement de la machine.

Il est généralement prévu que le dispositif 1 soit positionné en contact avec au moins une pile 3 de claies 2 à traiter, dite pile d'entrée.

Chaque pile 3 de claies 2 d'entrée est supportée par un pied de base 12 comprenant quatre plots de base 13.

Les premiers moyens de convoyage 5 sont aptes à convoyer les piles 3 de claies 2 supportées par leur pied de base 12.

Les premiers moyens de convoyage 5 sont chargés par exemple manuellement de piles 3 : deux piles 3 de claies 2 sur pied de base 12 sont déposées par un opérateur au moyen d'un chariot à fourches motorisé et roulant au sol.

Les moyens de convoyage 5 assurent le transfert selon la direction X de la première des deux piles jusqu'au poste de désempilage 14 occupé par les moyens de désempilage 6.

Le chargement des moyens de convoyage 5 avec des piles 3 peut être également effectué à l'aide d'une motorisation, voire avec un pilotage automatique et/ou programmable des déplacements du dispositif 1 par rapport aux piles 3 de claies 2.

Les moyens de désempilage 6 comprennent des moyens de préhension 15 de la pile 3 de claies 2 par le bas, en laissant le pied de base 12 sur les moyens de convoyage 5.

La pile 3 de claies 2 est élevée pour permettre ensuite sa dépose sur le système de transfert 7 de claies 2 après translation d'un pas selon la direction X.

Lorsque la pile 3 est déposée sur le système de transfert 7, des doigts de préhension de pile 3, appartenant aux moyens de préhension 15, s'ouvrent.

Les moyens de préhension 15 remontent alors pour saisir la pile 3 de claies 2, à partir de la claie située au-dessus de la claie déposée au-dessus du système de transfert 7.

Si l'on appelle n cette claie déposée, les moyens de préhension remontent pour saisir la claie située à un niveau n+1, portant le reste de la pile.

La claie niveau n, déposée sur le système de transfert 7, est transférée alors par ce système de transfert 7, typiquement un système de convoyage, d'un pas, pour l'amener au droit du poste de décollage 16 des fromages. Le poste de décollage 16 comprend les moyens de décollage 8.

La pile de claies commençant au niveau n + 1 est abaissée, de manière que la claie n + 1 vienne directement au-dessus du système de transfert 7, comme pour la claie précédente n décrite ci-dessus.

Les moyens de décollage 8 des fromages 4 de la claie comprennent un peigne métallique 17 situé sous la claie n avant le décollage des fromages 4. Pour le décollage, le peigne 17 passe au travers de la claie n en poussant les fromages 4 vers le haut. Plus précisément, le peigne 17 comprend une succession de lames 17a parallèles et espacées, aptes à passer entre les fils longitudinaux de la claie, de manière à décoller en les soulevant les fromages 4.

Avant d'exercer l'effort de décollage sur les fromages par le peigne métallique 17, un système de retenue de la claie est actionné, la claie étant ainsi maintenue en position lors du soulèvement du peigne 17.

La course verticale des moyens de décollage 8 assure en un point mort haut, l'introduction des fromages 4 dans un dispositif de repositionnement 18 du type système de conformation 19 de lignes. Ce système de conformation 19 est situé au droit au-dessus et espacé du peigne métallique 17. Ce système de conformation 19 est destiné au positionnement souhaité avant le retournement de chaque claie 3, des fromages 4 sur la claie 2 qui ont été déplacés lors du décollage et/ou qui n'ont pas la position souhaitée.

Selon une réalisation, ce système de conformation 19 de lignes comprend des moyens de repositionnement 20. Ces moyens de repositionnement 20 sont destinés à assurer l'alignement en plusieurs lignes sur la claie.

Dans la réalisation représentée, les moyens de repositionnement 20 permettent un alignement selon la direction Y.

Par exemple, une claie comprend quatre lignes 21 de fromages 4 selon la direction Y et sept lignes 22 de fromages 4 selon la direction X, les fromages 4 étant sensiblement cylindriques, de largeur 10 cm et de hauteur 3 cm.

L'espace souhaité entre deux lignes 21 est par exemple de 2 à 3 cm, l'espace souhaité entre deux lignes 22 est par exemple de 2 à 3 cm.

Le repositionnement des fromages sur les lignes 21 et 22 permet de maintenir sensiblement constantes les distances entre deux lignes 21, respectivement 22.

Les moyens de repositionnement comprennent, selon une réalisation, des doigts de repositionnement 23 verticaux, quatre doigts verticaux par fromage 4.

Ces doigts 23 sont associés sur deux structures de support 24, 25, animées de deux mouvements de translation en sens inverse, aller et retour.

Les deux structures support 24, 25 sont mobiles en translation selon la direction X, les doigts 23 se déplaçant ainsi dans les espaces E1 entre les fromages 4 des lignes 21 en cours de constitution. La structure support 24 comprend plusieurs lignes de doigts 26 alignés selon la direction Y, la structure 25 comprend plusieurs lignes de doigts 27 alignés selon la direction Y.

Pour un fromage 4 donné, quatre doigts 23 sont positionnés autour de ce fromage 4, dont deux doigts 26 et deux doigts 27.

Par exemple, pour un fromage, le fromage est entouré en position initiale de deux doigts 26 portés par une première structure support 24 et deux doigts 27 portés par une seconde structure support 25.

Les deux doigts 26 sont alignés selon la direction X, les deux doigts 27 sont alignés selon la direction X, chacun des deux doigts 26 est aligné avec un des doigts 27 selon la direction Y.

En position initiale, avant déplacement des doigts 26 et 27, les deux doigts 26 et 27 forment les angles d'un carré, le fromage 4 étant dans cette réalisation circulaire.

Lors du déplacement des structures support 24, 25, considérant deux doigts 26, 27 alignés sur un côté C du carré, ces doigts 26, 27 se déplacent en s'éloignant selon la direction Y des deux angles du carré, jusque dans la partie médiane du côté C.

Les doigts 26 viennent, lors de leur course aller C1, en position 26', les doigts 27 viennent en position 27'. Les doigts 26, 27 en position 26', 27' reviennent ensuite lors de leur course retour C2 en position initiale.

Ainsi, comme représenté en figure avant repositionnement, un fromage 4 dont le centre est en position théorique souhaitée A, et en fait en position B, est décalé d'une distance AB par rapport à la position A. Le fromage dépasse ainsi le carré délimité par les deux doigts 26 et les deux doigts 27 en position initiale. Le déplacement des doigts 26 et 27 permet le déplacement du fromage jusque dans la position théorique souhaitée.

Les doigts 23 mobiles dans la zone inter-fromages repoussent les fromages hors de cette zone, reconstituant ainsi l'alignement théorique.

Pour une claie donnée, dans la réalisation représentée, soit n le nombre de fromages disposés selon la direction Y, le nombre de doigts 26 est n et le nombre de doigts 27 est également n.

Pendant cette opération de repositionnement, les fromages 4 sont portés par la structure ayant permis le décollage 6, c'est-à-dire le peigne 17.

Après la course aller-retour des moyens de repositionnement, les moyens de décollage s'abaissent, les fromages 4 sont alors déposés sur la claie 2, et le peigne de décollage 17 est escamoté verticalement vers le bas.

La claie 3 supportant les fromages 4 repositionnés est ensuite transférée par convoyage selon la direction X jusqu'au poste de retournement 28 comprenant des moyens de retournement 9.

Ces moyens de retournements 9 se présentent sous la forme d'un retourneur 29.

Ce retourneur 29 comprend un rotor 30 mobile autour d'un axe de retournement longitudinal s'étendant selon la direction Y, et un stator 31 Le rotor 30 comprend notamment, deux montants longitudinaux parallèles latéraux 32 en position de repos, et deux montants parallèles longitudinaux centraux 33 en position de repos.

Les montants centraux 33 soutiennent deux traverses 34 sur chacune desquelles sont montées deux plaques 35. Avant retournement, les deux plaques 35 du côté inférieur forment un premier plateau du rotor 30, les deux plaques 35 du côté supérieur forment un second plateau.

Avant le retournement, le retourneur comprend ainsi une claie 36 inférieure, support des fromages décollés, et une claie supérieure 37 qui sera, après le retournement, la claie réceptrice des fromages décollés.

La claie 36 introduite dans le retourneur 29 est élevée par le premier plateau du rotor 30, afin d'emprisonner les fromages 4 entre la claie inférieure 36 et la claie supérieure 37.

L'espace E entre les claies 36 et 37 est supérieur à la hauteur des fromages à retourner, de sorte que les fromages 4 emprisonnés entre les claies 36, 37 le sont sans être serrés. Par exemple, pour un fromage de type camembert de 3 cm d'épaisseur, l'espace E est de 4 cm.

Afin d'éviter le déplacement non souhaité des fromages non serrés entre les claies lors du retournement, le retourneur 29 comprend des moyens de maintien 38.

Les moyens de maintien 38 se présentent sous la forme de cloisons 39 espacées parallèles, aptes à retenir le déplacement par gravité vers le bas des fromages 4 en cours de retournement.

Dans cette réalisation, pour quatre lignes 21 de fromages, les moyens de maintien 38 comprennent quatre cloisons de retenue 39. Les cloisons 39 sont transversales par rapport au sens de transfert du convoyeur, et parallèles à l'axe de retournement.

L'espace E entre deux claies 36, 37, et la structure des cloisons 39 sont tels que les cloisons 39 retiennent les fromages 4 pendant la rotation de retournement.

Ces cloisons 39 sont positionnées dans les zones inter-fromages formant les lignes qui ont été délimitées par les doigts 23 de repositionnement du système de conformation 19 de lignes décrit précédemment.

Les cloisons 39 sont équipées de formes 40, telles que des plots, disposées entre les emplacements théoriques des fromages obtenus lors de l'étape de repositionnement.

Ces formes 40 limitent le déplacement non souhaité des fromages selon la direction Y, et contribuent à repositionner les fromages, pendant le mouvement de retournement.

Après la rotation de 180°, les fromages se retrouvent sur la claie réceptrice en position inférieure dans le retourneur, c'est-à-dire initialement la claie supérieure 37.

La claie réceptrice 36 des fromages 4 est ensuite descendue par le second plateau du rotor 30 jusqu'aux moyens de convoyage 5.

La claie réceptrice 36 portant les fromages retournés est ensuite transférée par les seconds moyens de convoyage 11, sur une position intermédiaire, puis jusqu'aux moyens d'empilage 10 de claies 2. Cette position intermédiaire est prévue du fait de l'encombrement des moyens d'empilage 10.

Les moyens d'empilage 10 comprennent, un empileur 41 et un préhenseur 42.

Considérant une claie n réceptrice, en sortie du retourneur, lorsque cette claie n arrive au droit de l'empileur 41, l'empileur en position haute.

Le préhenseur 42 est en position fermée, soutenant la claie n-1, c'est-à-dire la claie précédemment empilée dans l'empileur 41. La claie n-1 étant elle-même la claie inférieure de la pile de claies en cours de constitution.

Lorsque la claie n est au droit de la pile de claies, l'empileur 41 dépose la claie n-1 au-dessus de la claie n, saisit la claie n et remonte en position haute. La claie n devient alors la claie n-1 pour la claie suivante.

Lorsque le nombre de claies 3 empilées correspond à la consigne d'empilage, la partie extrême aval 43 du système de transfert 7 s'escamote pour permettre la descente de la pile et son emboîtement sur le pied de base situé en attente sur le convoyeur.

Les seconds moyens de convoyage 11 de cadre de base 12 et de piles 3 de claies assure le transfert des pieds de base 12 depuis le poste de désempilage 14, jusque sous l'empileur 41.

Les seconds moyens de convoyage 11 transfèrent les piles 3 en sortie pour permettre l'enlèvement de deux piles par un opérateur, au moyen d'un chariot à fourches motorisé roulant au sol.

Le premier mode de réalisation décrit précédemment illustre notamment les étapes de repositionnement des fromages après leur décollage d'une claie amont, et de maintien en position souhaitée lors du retournement.

D'autres modes de réalisation de l'invention peuvent être envisagés concernant notamment la structure et le fonctionnement des moyens de repositionnement.

Selon un second mode de réalisation des moyens de repositionnement, les moyens de repositionnement comprennent, au lieu de doigts, des lames formant cloison, destinées à aligner les produits selon la direction Y.

Ces lames une fois positionnées entre les lignes 21 de fromages sont animées d'un mouvement de translation en va-et-vient selon la direction X.

Ce mode de réalisation est plus particulièrement utilisé lorsque les produits chargés sur les claies d'entrée ne sont pas trop écartés de leur emplacement théorique souhaité, au risque sinon d'endommager les produits.

L'utilisation de doigts occupant un espace réduit entre les produits limite, en effet les risques d'altération des produits.

Selon un deuxième mode de réalisation, les moyens de repositionnement comprennent, à la place de doigts, des coins de guidage. Ces coins sont mobiles de manière à permettre un repositionnement des fromages à la fois selon la direction X et la direction Y.

Par exemple, pour un fromage circulaire, ces coins constituent pour chaque fromage les quatre angles d'un carré entourant le fromage. Chaque coin et mobile, avec une course aller vers le centre du carré, et une course retour vers l'angle du carré.

Selon un troisième mode de réalisation, l'alignement des produits avant le repositionnement est tel que les moyens de repositionnement ne permettent pas comme dans le premier et le second modes de réalisation, un réalignement selon les directions X et Y.

Les moyens de repositionnement sont alors tels qu'ils permettent un réalignement selon la direction X puis selon la direction Y, ou inversement. Le repositionnement fait intervenir par exemple également deux structures. Une première structure est destinée à un alignement selon une direction, par exemple la direction Y, l'autre structure étant destinée à un alignement selon la direction X.

Selon une première variante, la première structure comprend des cloisons parallèles selon la direction Y, mobiles latéralement selon la direction X. La seconde structure comprend des cloisons selon la direction X, mobiles 3, latéralement selon la direction Y.

Selon une second variante, la première structure comprend, pour chaque ligne de produits, au lieu de plusieurs doigts alignés se déplaçant sur une course réduite comme dans le premier mode de réalisation, un seul doigt se déplaçant sur toute la dimension de la claie selon l'axe X, et un seul doigt se déplaçant sur la claie selon l'axe Y. Ces déplacements selon l'axe X et l'axe Y peuvent être simultanés ou séquentiels.

De même, d'autres modes de réalisation des moyens de maintien peuvent être envisagés.

Selon un autre mode de réalisation, les moyens de maintien pendant le retournement ne sont pas des cloisons équipées de formes, mais constituent un cadre compartimenté, les compartiments étant d'une dimension proche de celle des fromages.

Cette réalisation requiert, pour éviter l'altération des fromages par le cadre, un positionnement suffisamment précis et maîtrisé des fromages sur les claies entrant dans le retourneur.

En outre, on a décrit un premier mode de réalisation du dispositif de retournement mettant en oeuvre des moyens de repositionnement en amont. Un tel repositionnement n'est pas nécessaire si les produits sont correctement disposés avant le retournement.

Les compartiments peuvent être de forme variable selon le fromage, par exemple rectangulaire, ou cylindrique.

Ces quelques exemples de mode de réalisation illustrent l'intérêt, et/ou la nécessité d'adapter la structure et le fonctionnement des moyens de repositionnement et/ou des moyens de maintien aux types de produits utilisés. Par exemple, des produits fragiles tels que des fromages à pâte molle, peuvent nécessiter une précision élevée de déplacement des moyens de repositionnement et des moyens de maintien.

La vitesse des opérations est également paramétrée selon le type de produits utilisés.

Par ailleurs, on a décrit des modes de réalisation avec un seul type de produits retournés, en l'occurrence des fromages.

Selon des besoins industriels spécifiques, on peut être amené à retourner des claies comprenant plusieurs types de fromages, de format éventuellement variable. La structure et le fonctionnement des moyens de repositionnement et des moyens à de maintien est alors à adapter en conséquence, notamment les dimensions des espaces inter-fromages, et des espaces entre deux claies du retourneur.

Par exemple, selon une variante, les cloisons de retenue 39 ne sont pas de dimension égale pour toute la claie. Selon une autre variante, les plots comprennent plusieurs segments encastrables, le nombre de segments d'un plot déterminant sa hauteur qui est ainsi modulable.

En outre, on a décrit un procédé automatisé avec une phase amont de désempilage d'une pile de claies, et une phase aval d'empilage d'une pile de claies. L'étape de retournement, et le cas échéant, l'étape de repositionnement, peuvent être intégrées à un procédé ne comprenant pas d'empilage et de désempilage de piles de claies.

Par exemple, les claies à retourner sont amenées par un convoyeur s'intégrant dans une chaîne de production, et les claies en sortie du retourneur sont distribuées vers un ou plusieurs convoyeurs de sortie pour des opérations ultérieures, par exemple de conditionnement.

## Revendications

1. Procédé de retournement d'au moins une préparation alimentaire (4), notamment d'un fromage ou d'une préparation fromagère durant son affinage, initialement déposée sur une claie (3) amont, jusqu'à une claie réceptrice aval de la ou des préparations retournées du fait du retournement dans un retourneur, caractérisé en ce que les produits à retourner sont repositionnés pour le retournement par des moyens de repositionnement (20), et maintenus lors du retournement, sans serrage, par un dispositif de maintien (38, 39, 40) limitant leur déplacement, de manière qu'ils soient en position souhaitée sur la claie réceptrice (36) après le retournement.

2. Procédé de retournement selon la revendication 1, caractérisé en ce que après repositionnement dans la position souhaitée pour le retournement, les produits sont alignés et forment plusieurs lignes (21, 22) parallèles entre elles et perpendiculaires à la direction de convoyage.

3. Procédé de retournement selon la revendication 1 ou 2, caractérisé en ce les moyens de repositionnement (20) des produits sont mobiles dans la zone inter-produits (E1), repoussant les produits hors de cette zone, jusqu'à la position souhaitée pour le retournement, les moyens de repositionnement (20) étant animés de deux mouvements de translation inverse, aller et retour.

4. Procédé de retournement selon l'une quelconque des revendications 1 à 3, caractérisé en ce que l'étape de retournement d'une claie comprend les phases de:
- mise en position du dispositif de maintien (38,39,40), la claie amont supportant les produits (4) à retourner étant au droit et en position inférieure dans le retourneur (29), la claie réceptrice (37) étant en position supérieure dans le retourneur par rapport à la claie (36) amont avant le retournement, la claie inférieure (36) et la claie supérieure (37) étant séparées par un espace suffisant pour éviter le serrage des produits à retourner ;
- rotation du retourneur de 180°, la claie réceptrice (37) étant amenée en position inférieure et devenant une claie aval supportant les produits retournés, le dispositif de maintien (38,39,40) et la rotation étant tels que le déplacement non souhaité des produits est évité lors du retournement ;
- retrait du dispositif de maintien (38,39,40) et évacuation de la claie réceptrice (37) du retourneur (29)

5. Procédé de retournement selon l'une quelconque des revendications 1 à 4, caractérisé en ce que la claie amont introduite dans le retourneur est élevée par un premier plateau d'un rotor (30) du retourneur, afin d'emprisonner les produits entre les deux claies, sans serrage de ceux-ci, les produits s'engageant en fin d'élévation du premier plateau entre les moyens de maintien positionnés dans les zones inter-produits (E1) de la claie à retourner; puis après la rotation de 180°, la claie réceptrice des produits aval est descendue par un second plateau du rotor (30) du retourneur, sur le système de transfert (7) aval.

6. Procédé de retournement selon l'une quelconque des revendications 1 à 5, caractérisé en ce qu'il permet, à partir d'une pile (2) amont de claies (3), de former une nouvelle pile (2) aval de claies (3), dans laquelle la ou les préparations alimentaires (4) ont été retournées par rapport à un axe horizontal, le procédé comprenant les étapes de :
- mise en place de la pile de claies amont contenant les produits à retourner ;
- prélèvement à l'aide de moyens de désempilage (6) d'une claie amont à retourner de la pile de claies amont ;
- transfert de la claie prélevée, avec décollage éventuel des produits de la claie à retourner, jusqu'à un poste de retournement (28) ;
- retournement de la claie amont par le retourneur, les produits passant sur la claie réceptrice (37) du fait du retournement, en étant maintenus par le dispositif de maintien (38,39,40) ;
- transfert de la claie réceptrice vers la pile de claies réceptrices aval ;
ces étapes étant éventuellement recommencées jusqu'au désempilage complet des claies de la pile amont et à l'empilage de la pile de claies aval, dans laquelle les préparations alimentaires sont retournées.

7. Procédé de retournement selon la revendication 6, caractérisé en ce que le désempilage des claies de la pile de claies amont comprend les étapes suivantes :
- saisie par des moyens de désempilage (6) de la pile de claies amont par le bas ;
- élévation de la pile de claies pour permettre sa dépose sur un dispositif de transfert (7) ;
- dépose de la pile sur le dispositif de transfert (7) puis relevage de la pile sauf la claie inférieure qui reste sur le dispositif de transfert (7) qui la conduit jusqu'au poste de retournement

8. Procédé de retournement selon la revendication 6 ou 7, caractérisé en ce que l'étape d'empilage comprend les phases suivantes :
- saisie par des moyens d'empilage (10) de la claie réceptrice chargée des produits retournés, située en position inférieure dans la pile de claies en cours de constitution ;
- relevage de la pile comprenant la claie saisie
- une fois le nombre de claies empilées correspondant à la consigne d'empilage, escamotage du dispositif de transfert (7) pour permettre la descente de la pile et son évacuation.

9. Dispositif de retournement mettant en oeuvre le procédé de retournement automatisé de préparations alimentaires selon l'une quelconque des revendications 1 à 8, caractérisé en ce qu'il comporte sur un châssis unitaire :
- un dispositif de repositionnement (18) des produits avant le retournement ;
- un dispositif de maintien (38, 39, 40) des produits pendant le retournement ;
- des moyens de retournement des claies supportant les produits à retourner ;
- le cas échéant un dispositif de désempilage de claies en entrée et un dispositif d'empilage de claies en sortie ;
- un dispositif de transfert (7) de claies en amont et en aval du dispositif de retournement.

10. Dispositif de retournement selon la revendication 9, caractérisé en ce que le dispositif de repositionnement (18) forme un système de conformation de lignes de produits sur les claies, destiné à reconstituer l'alignement théorique souhaité des fromages sur les claies à retourner, de manière à pouvoir mettre en place les moyens de maintien (38) sans altérer les produits lors du retournement.

11. Dispositif selon la revendication 10, caractérisé en ce que les moyens de repositionnement (20) comprennent des barres pleines, creuses ou grillagées, animées de mouvements horizontaux dans la zone interfromages destinées à pousser les produits hors de cette zone, leur section étant parallèlépipédique ou sensiblement circulaire.

12. Dispositif de retournement selon la revendication 10, caractérisé en ce que les moyens de repositionnement (20) comprennent des doigts de guidage (23) sensiblement verticaux, quatre doigts par produit, associés sur deux structures (24, 25), animées de deux mouvements de translation inverse, aller et retour, évoluant au-dessus de la claie, dans la zone inter-produits, de manière à repousser les produits hors de cette zone.

13. Dispositif selon la revendication 10, caractérisé en ce que les moyens de repositionnement (20) comprennent des coins présentant une face arrondie de guidage des produits en-dehors de la zone inter-fromages.

14. Dispositif selon l'une quelconque des revendications 9 à 13, caractérisé en ce que les moyens de maintien (38) comprennent des cloisons de retenue (39), situées entre chaque ligne (21) de produits, des produits tombant par gravité, et des plots éventuellement fixés aux cloisons (39), les moyens de maintien ayant un encombrement suffisant pour maintenir les produits dans la position souhaitée lors du retournement, typiquement au moins deux (39) plots par produit, la distance entre la surface supérieure d'un produit et la claie supérieure avant retournement étant comprise entre 0,1 et 0,5 fois l'épaisseur du produit.

15. Dispositif selon l'une quelconque des revendication 9 à 14, caractérisé en ce que les moyens de maintien (38) et les moyens de repositionnement (20) ont une structure modulaire adaptable aux produits de la claie à retourner de manière à pouvoir retourner plusieurs formats différents de produits sur une même claie.

16. Installation telle qu'une fromagerie, caractérisée en ce qu'elle comporte un dispositif selon l'une quelconque des revendications 9 à 15 et/ou permet la mise en oeuvre du procédé selon l'une quelconque des revendications 1 à 8.
